(19) Europäisches Patentamt
European Patent Office
Office européen des brevets

(11) **EP 3 328 112 A1**

(12) **EUROPEAN PATENT APPLICATION**

(43) Date of publication:
**30.05.2018 Bulletin 2018/22**

(51) Int Cl.:
***H04W 16/18*** (2009.01)       ***H04W 24/08*** (2009.01)
***H04W 24/00*** (2009.01)

(21) Application number: **16290223.3**

(22) Date of filing: **28.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent**
**91620 Nozay (FR)**

(72) Inventors:
• **Ligata, Amir**
**2018 Antwerpen (BE)**
• **Gacanin, Haris**
**2018 Antwerpen (BE)**

(74) Representative: **IP HILLS NV**
**Hubert Frère-Orbanlaan 329**
**9000 Gent (BE)**

(54) **DETERMINING COVERAGE EFFICIENCY OF AN ACCESS POINT IN A WIRELESS NETWORK**

(57)   According to an embodiment, the invention relates to a device (100) for determining the coverage efficiency of an access point (200) connected to associated devices (220, 221, 222, 223) in a wireless network, the device (100) comprising an observation module (101) configured to receive performance parameters from the associated devices; a classification module (102) configured to classify the associated devices into stationary and non-stationary associated devices based on the performance parameters; and a coverage calculation module (103) configured to calculate the coverage efficiency of the access point (200) based on the performance parameters of the non-stationary associated devices.

Fig. 1

EP 3 328 112 A1

**Description**

**Technical Field**

The present invention generally relates to the field of determining the coverage efficiency of an access point in a wireless network.

**Background**

The coverage of an access point, AP, in a wireless network is an important aspect which can be quantified in terms of received signal strength indications, RSSI, levels between associated devices, STAs, connected to the AP. If an RSSI level of a STA is above a receiver sensitivity of the STA, the STA is within the coverage of the AP. An average, maximum and minimum value of RSSI levels of STAs connected to an AP therefore indicate the coverage the AP.

Different parameters such as the placement of both the STA and the AP, the STA's mobility, various obstacles between the STA and the AP and environment factors may deteriorate the RSSI level of a STA and may give rise to a poor coverage and thus coverage efficiency.

**Summary**

RSSI values of each STA connected to an AP are thus taken into account in order to calculate the average, the maximum and the minimum RSSI values. These calculated values indicate therefore a coverage of the AP by equally taking into account all the STAs connected to it. However, different parameters, such as placement and mobility of STAs are not taken into account which may result in a too optimistic or misleading value of the coverage efficiency.

It is therefore an objective to disclose a device and the related method that overcomes the above identified shortcoming of an existing solution. More particularly, it is an objective to determine a performance indicator of the coverage efficiency of an AP wherein the type of a STA is taken into account.

According to a first aspect of the present disclosure, the above identified objective is realized by a device for determining the coverage efficiency of an access point (AP) having associated devices (STAs) connected to it in a wireless network, the device comprising an observation module configured to receive performance parameters from the STAs; a classification module configured to classify the STAs into stationary and non-stationary STAs based on the performance parameters; and a coverage calculation module configured to calculate the coverage efficiency of the AP based on the performance parameters of the non-stationary STAs.

Thus from each STA connected to the AP performance parameters are received. Next, these STAs are classified into stationary and non-stationary STAs based on these received performance parameters. A non-stationary STA may, for example, be a mobile phone, while a stationary STA may, for example, be a Wi-Fi extender. Finally, the coverage efficiency of the AP is calculated by only taken into account the performance parameters of the non-stationary STAs.

Stationary STAs, such as for example a Wi-FI extender, may have limited fluctuations of performance parameters resulting in relatively stable values. These values, however, don't reflect a coverage efficiency of an AP as the stationary STA may be placed too far from the AP. Hence, it is an advantage that only the performance parameters of non-stationary STAs are taken into account, since by taking into account the type of a STA and thus performance parameters of solely the non-stationary STAs, a more meaningful performance indicator of the coverage efficiency of an AP is obtained.

According to an embodiment, the performance parameters comprise signal strength indicator, RSSI, levels.

The RSSI levels are included in the IEEE 802.11 Wi-Fi standard and measured in dBm. Therefore they indicate the strength of the signal for each channel of the AP and are a good indicator of a transmission range, and thus a coverage of the AP.

It is an advantage that the performance parameters comprise RSSI levels since they immediately indicate the signal strength level. Consequently, a standard value may be used and no computation from a measurement to a signal strength is needed.

According to an embodiment, the observation module is further configured to obtain a connection time for each STA and the classification module is further configured to classify the STAs into stationary and non-stationary STAs based on a standard deviation of RSSI levels and the connection time of each STA.

Besides performance parameters, such as for example RSSI levels, also the connection time for each STA is obtained. The connection time captures the time during which a STA is connected to the AP. Since stationary STAs tend to be connected longer in time compared to non-stationary STAs, the connection time for a STA may be used as well in order to classify STAs into stationary and non-stationary STAs. Thus, instead of an RSSI level, the standard deviation of RSSI levels coupled to the connection time of each STA may be used to identify the type of a STA such that a classification may be performed.

An advantage of taking into account the connection time of a STA as well is that the classification of STAs into stationary and non-stationary STAs may be performed in a more accurate way.

According to an embodiment, the coverage calculation module is further configured to calculate a coverage efficiency for each non-stationary STA based on a mean value and standard deviation of RSSI levels per non-stationary STA.

According to an embodiment, the coverage efficiency of the AP is further based on a weighted average of the mean and standard deviation of the coverage efficiency of each non-stationary STA, and wherein the weighting is based on the connection time.

After the calculation of coverage efficiencies of non-stationary STAs connected to an AP, the overall coverage efficiency of the AP is calculated based on the coverage efficiencies of the non-stationary STAs. This is done by calculating a weighted average of the mean and standard deviation of the coverage efficiencies of the non-stationary STAs. The weighted average takes into account the connection time of each non-stationary STA.

An advantage is that is single value is obtained indicating a coverage efficiency of the AP.

According to a second aspect the disclosure relates to a method for determining the coverage efficiency of an access point (AP) connected to associated devices (STAs) in a wireless network, the method comprising receiving performance parameters from the STAs; classifying the STAs into stationary and non-stationary STAs based on the performance parameters; and calculating the coverage efficiency of the AP based on the performance parameters of the non-stationary STAs.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

## Brief Description of the Drawings

Fig. 1 illustrates a device for determining the coverage efficiency of an access point according to an embodiment of the disclosure;

Fig. 2 illustrates an access point and connected devices;

Fig. 3 represents a connection time ratio and standard deviation of RSSI for connected devices of an access point;

Fig. 4 illustrates steps performed to determine a coverage efficiency of an access point; and

Fig. 5 illustrates a computer system that can be configured to execute one or more embodiments of the method for determining the coverage efficiency of an access point.

## Detailed Description of Embodiment(s)

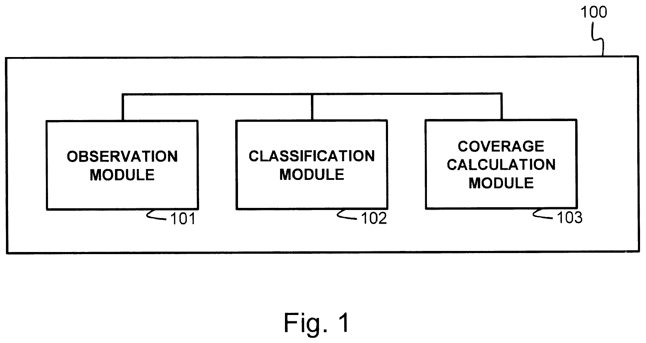

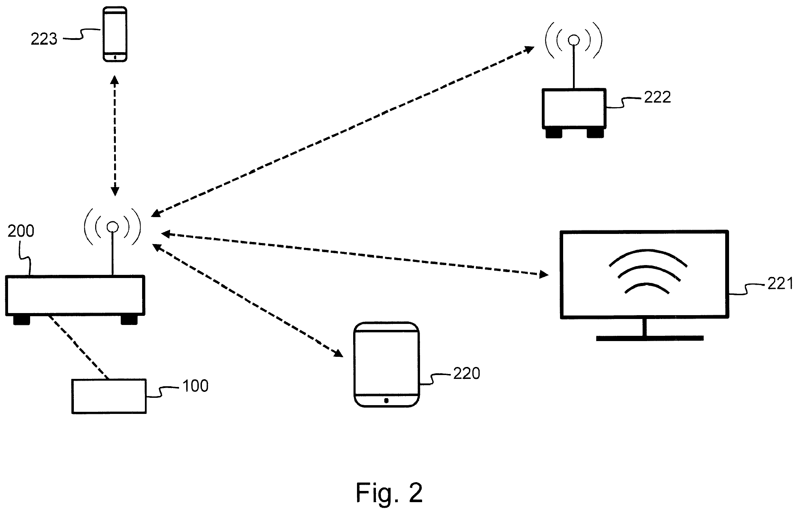

According to an embodiment, the disclosure relates to a device for determining the coverage efficiency of an access point (AP) connected to associated devices (STAs) in a wireless network. Figure 1 illustrates such a device 100 and figure 2 illustrates an AP 200 connected to STAs 220, 221, 222 and 223 in a wireless network for which device 100 calculates a coverage efficiency of the AP 200.

The device 100 comprises an observation module 101, a classification module 102 and a coverage calculation module 103. The observation module 101 is configured to receive performance parameters from the STAs 220, 221, 222 and 223. The performance parameters may, for example, comprise RSSI levels and a connection time for each STA. The STAs may, for example, be a tablet 220, a smart TV 221, a Wi-Fi extender 222 or a mobile phone 223. Next, a classification module 102 is configured to classify the STAs 220, 221, 222 and 223 into stationary and non-stationary STAs based on the performance parameters. Since, in general, a smart TV 221 and Wi-Fi extender are located on a fixed position, they are classified as stationary STAs, while a tablet 220 and a mobile phone 223 may be moved relatively to the AP 200 they will be classified as non-stationary STAs. Finally, a coverage calculation module 103 calculates the coverage efficiency of the AP 200 based on the performance parameters of the non-stationary STAs 220 and 223.

According to an embodiment, the classification module 102 is configured to classify STAs 220, 221, 222 and 223 into stationary and non-stationary STAs based on a standard deviation of RSSI levels and the connection time ratio of each STA.

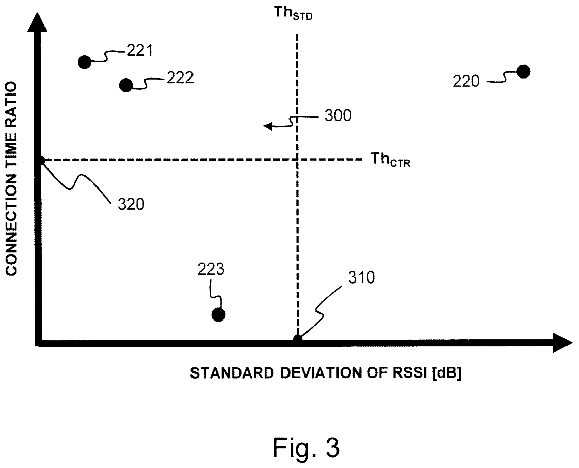

Figure 3 represent these parameters for each STA in a two-dimensional graph, wherein standard deviations of RSSI levels are presented on the horizontal axis and expressed in dB and connection time ratios on the vertical axis. The STAs may thus be presented as points in the graph by their respective connection time ratio and standard deviation or RSSI levels, such as STAs 220, 221, 222 and 223. Since stationary STAs, such as a smart TV 221 and a Wi-Fi extender 222 tend to be connected longer in time and since they have lower fluctuations or RSSI levels compared to non-stationary STAs, such as a tablet 220 or a mobile phone 223, the points representing the STAs are located in different areas in the graph.

A connection time ratio $CTR(k)$ for a STA may be calculated by sampling an activity and authentication parameter, represented as $ACT(k,i)$ respectively $AUTH(k,i)$, during a sample period, wherein $k$ represent the number of the STA and $i$ the sample number in a total sample period $N$. The activity parameter $ACT(k,i)$ corresponds to one if a $k$-th STA is active during sample time $i$ in the sample period N, otherwise it equals to zero. If a $k$-th STA is authenticated with the AP during the sample time $i$ in the sample period N, the value of $AUTH(k,i)$ equals to one, otherwise to zero. Hence, the connection time ratio of a $k$-th STA may be calculated as follows

$$CTR(k) = \sum_{i=1}^{N} \frac{(ACT(k,i).AUTH(k,i))}{N} \qquad \text{(eq.1)}.$$

Next by defining a threshold for the connection time ratio, $Th_{CTR}$ 320, and a threshold for the standard deviation RSSI values, $TH_{STD}$ 310, an area 300 in the graph may be defined. If the points representing the STAs are located within the area 300, such as 221 and 222, the STAs are classified as stationary STAs, while the points located outside this area 300, such as 220 and 223, are classified as non-stationary STAs. The thresholds $TH_{STD}$ 310 and $TH_{CTR}$ 320 may, for example, initially be set at 5 and 0.75 respectively.

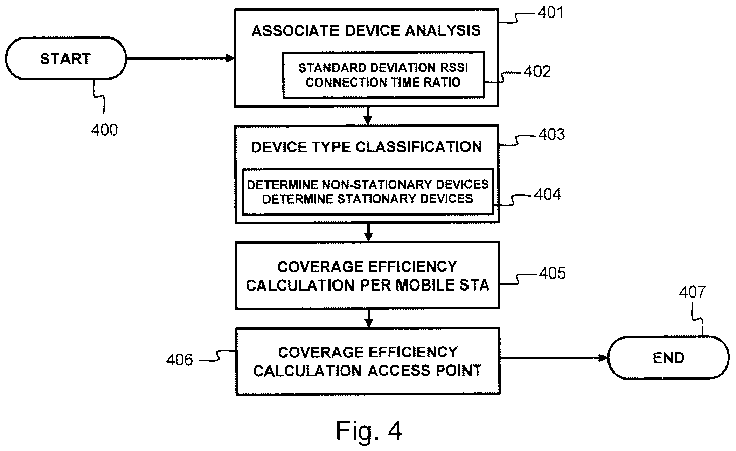

The first steps that the device 100 performs, may also represented in a flow chart. Figure 4 illustrates such a flow chart, where at the start 400 STAs are analysed 401 by the use of a standard deviation RSSI and connection time ratio 402. Based on these parameters, each type per device is classified 403, wherein non-stationary devices and stationary devices are determined 404.

In the next step, the device calculates 405 a coverage efficiency calculation for each non-stationary STA. This may be done based on a mean value and standard deviation as follows

$$CE(k) = \frac{VAL - MEAN(RSSI(k)) - STD(RSSI(k))}{100} \qquad \text{(eq.2)}$$

wherein *VAL* is a configuration parameters and is a function of a maximum emitted power of the AP.

In the final step, a coverage efficiency for the access point is calculated 406 based on coverage efficiencies of the STAs. This may be done as follows:

$$CE(AP) = \sum_{k=1}^{M} CE(k).w(k) \qquad \text{(eq.3)}$$

wherein w(k) is a weighting factor which takes into account the connection time ratio of each STA and may be calculated as follows

$$w(k) = \frac{CTR(k)}{\sum_{k=1}^{M} CTR(k)} \qquad \text{(eq.4)}.$$

The number M in the last two equations equals to the number of non-stationary devices as classified by the device 100. Finally, in the last step 407 the calculated coverage efficiency of the AP may be, for example, reported to a management control system.

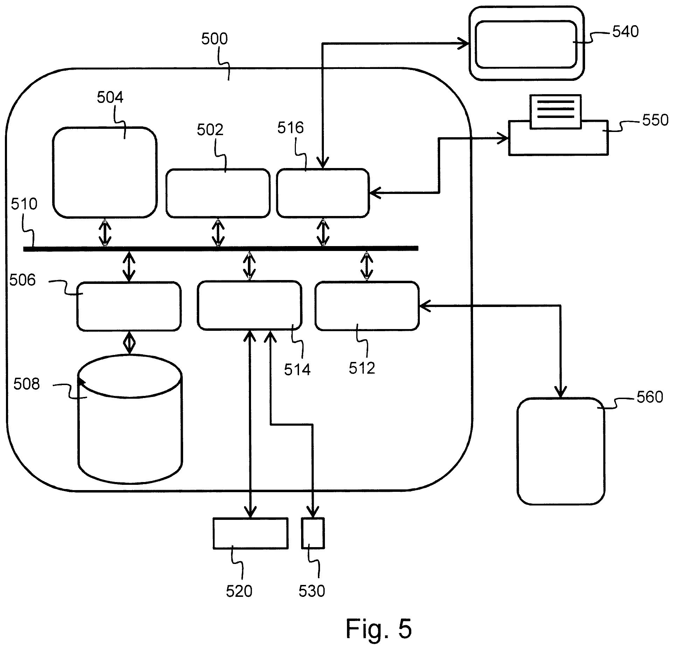

Fig. 5 shows a suitable computing system 500 for performing the steps according to the above embodiments. Computing system 500 may be used as a networking device 100 for determining a coverage efficiency of an AP 200 connected to STAs 220, 221, 222 and 223. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems 960. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A device for determining the coverage efficiency of an access point (AP) having associated devices (STAs) connected to it in a wireless network, the device comprising:

   - an observation module configured to receive performance parameters from the STAs;
   - a classification module configured to classify the STAs into stationary and non-stationary STAs based on the performance parameters; and
   - a coverage calculation module configured to calculate the coverage efficiency of the AP based on the performance parameters of the non-stationary STAs.

2. The device according to claim 1, wherein the performance parameters comprise signal strength indicator, RSSI, levels.

3. The device according to claim 2, wherein the observation module is further configured to obtain a connection time for each STA and wherein the classification module further is configured to classify the STAs into stationary and non-stationary STAs based on a standard deviation of RSSI levels and the connection time of each STA.

**4.** The device according to claim 3, wherein the coverage calculation module is further configured to calculate a coverage efficiency for each non-stationary STA based on a mean value and standard deviation of RSSI levels per non-stationary STA.

**5.** The device according to claim 4, wherein the coverage efficiency of the AP is further based on a weighted average of the mean and standard deviation of the coverage efficiency of each non-stationary STA, and wherein the weighting is based on the connection time.

**6.** Method for determining the coverage efficiency of an access point (AP) having connected associated devices (STAs) to it in a wireless network, the method comprising:

- receiving performance parameters from the STAs;
- classifying the STAs into stationary and non-stationary STAs based on the performance parameters; and
- calculating the coverage efficiency of the AP based on the performance parameters of the non-stationary STAs.

**7.** A computer program product comprising computer-executable instructions for performing the method according to claim 6 when the program is run on a computer.

**8.** A computer readable storage medium comprising the computer product according to claim 7.

**9.** A data processing system programmed for carrying out the method according to claim 6.

100

| OBSERVATION MODULE | CLASSIFICATION MODULE | COVERAGE CALCULATION MODULE |
| --- | --- | --- |

101

102

103

Fig. 1

Fig. 2

Fig. 3

Fig. 4

Fig. 5

Europäisches
Patentamt

European
Patent Office

Office européen
des brevets

## EUROPEAN SEARCH REPORT

Application Number

EP 16 29 0223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 326 130 A1 (RESEARCH IN MOTION LTD [CA]) 25 May 2011 (2011-05-25) * paragraphs [0007], [0011], [0013], [0021], [0023] * ----- | 1-9 | INV.<br>H04W16/18<br>H04W24/08<br>H04W24/00 |
| Y | EP 1 081 972 A2 (LUCENT TECHNOLOGIES INC [US]) 7 March 2001 (2001-03-07) * paragraphs [0005], [0011], [0023], [0078] * ----- | 1-9 | |
| A | US 2013/183908 A1 (JUNG SUNG HOON [KR] ET AL) 18 July 2013 (2013-07-18) * paragraph [0116] - paragraph [0123] * ----- | 1-9 | |
| A | GB 2 347 826 A (LG INF & COMM LTD [KR]) 13 September 2000 (2000-09-13) * page 2, line 11 - page 3, line 6 * ----- | 1-9 | |
| A | US 2014/256347 A1 (LAKHZOURI ABDELMONAEM [FI] ET AL) 11 September 2014 (2014-09-11) * Background doc for determining mobilit; paragraph [0005] * ----- | 1-9 | TECHNICAL FIELDS SEARCHED (IPC)<br><br>H04W |

The present search report has been drawn up for all claims

| Place of search | Date of completion of the search | Examiner |
|---|---|---|
| The Hague | 23 June 2017 | Dionisi, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 29 0223

This annex lists the patent family members relating to the patent documents cited in  the above-mentioned European search report.
The members are as contained in the European Patent Office EDP file on
The European Patent Office is in no way liable for these particulars which are merely given for the purpose of information.

23-06-2017

| Patent document cited in search report | | | Publication date | Patent family member(s) | | | Publication date |
|---|---|---|---|---|---|---|---|
| EP 2326130 | A1 | | 25-05-2011 | AT | 544314 | T | 15-02-2012 |
| | | | | CA | 2721844 | A1 | 19-05-2011 |
| | | | | CN | 102088724 | A | 08-06-2011 |
| | | | | EP | 2326130 | A1 | 25-05-2011 |
| | | | | US | 2011117856 | A1 | 19-05-2011 |
| EP 1081972 | A2 | | 07-03-2001 | AU | 5360200 | A | 08-03-2001 |
| | | | | BR | 0003758 | A | 03-04-2001 |
| | | | | CA | 2316441 | A1 | 28-02-2001 |
| | | | | CN | 1286578 | A | 07-03-2001 |
| | | | | DE | 60011194 | D1 | 08-07-2004 |
| | | | | DE | 60011194 | T2 | 23-06-2005 |
| | | | | EP | 1081972 | A2 | 07-03-2001 |
| | | | | JP | 3917804 | B2 | 23-05-2007 |
| | | | | JP | 2001136121 | A | 18-05-2001 |
| | | | | KR | 20010050257 | A | 15-06-2001 |
| | | | | US | 6522888 | B1 | 18-02-2003 |
| US 2013183908 | A1 | | 18-07-2013 | CN | 103125131 | A | 29-05-2013 |
| | | | | KR | 20130052622 | A | 22-05-2013 |
| | | | | US | 2013183908 | A1 | 18-07-2013 |
| | | | | WO | 2012044047 | A2 | 05-04-2012 |
| GB 2347826 | A | | 13-09-2000 | GB | 2347826 | A | 13-09-2000 |
| | | | | KR | 20000045762 | A | 25-07-2000 |
| US 2014256347 | A1 | | 11-09-2014 | US | 2014256347 | A1 | 11-09-2014 |
| | | | | WO | 2014137545 | A1 | 12-09-2014 |

EPO FORM P0459

For more details about this annex : see Official Journal of the European Patent Office, No. 12/82